**Europäisches Patentamt**

**European Patent Office**

**Office européen des brevets**

(19)

(11) Publication number : **0 481 077 B1**

# EUROPEAN PATENT SPECIFICATION

(12)

(45) Date of publication of patent specification :
**19.04.95 Bulletin 95/16**

(51) Int. Cl.⁶ : **G01C 15/00**, G01B 7/00,
E21D 9/06, G01S 5/00,
G01V 3/00

(21) Application number : **90909833.7**

(22) Date of filing : **29.06.90**

(86) International application number :
**PCT/JP90/00847**

(87) International publication number :
**WO 91/00497 10.01.91 Gazette 91/02**

(54) **DEVICE FOR MEASURING POSITION OF UNDERGROUND EXCAVATOR.**

(30) Priority : **30.06.89 JP 170422/89**

(43) Date of publication of application :
**22.04.92 Bulletin 92/17**

(45) Publication of the grant of the patent :
**19.04.95 Bulletin 95/16**

(84) Designated Contracting States :
**DE FR GB**

(56) References cited :
**EP-A- 0 343 140**
**JP-A- 625 114**
**JP-A- 625 115**
**JP-A- 625 116**
**JP-A- 625 117**
**JP-A- 625 118**
**JP-A- 625 119**
**JP-A- 625 120**
**JP-A- 625 121**
**JP-A- 6 342 492**
**JP-A-63 120 219**
**US-A- 3 529 682**
**US-A- 4 710 708**

(73) Proprietor : **KABUSHIKI KAISHA KOMATSU
SEISAKUSHO
3-6, Akasaka 2-chome
Minato-ku Tokyo 107 (JP)**

(72) Inventor : **SAKANISHI, Shoichi Komatsu
Research Institute
1200, Manda
Hiratsuka-shi Kanagawa 254 (JP)**
Inventor : **SHIBATANI, Kanji Komatsu
Research Institute
1200, Manda
Hiratsuka-shi Kanagawa 254 (JP)**

(74) Representative : **Meissner, Peter E., Dipl.-Ing.
et al
Meissner & Meissner,
Patentanwaltsbüro,
Postfach 33 01 30
D-14171 Berlin (DE)**

## Description

### TECHNICAL FIELD

The present invention relates to a position measuring apparatus of an underground excavator and, more particularly, to a position measuring apparatus of an underground excavator, such as a shield machine, which excavates underground.

An apparatus with the features of the preamble of claim 1 is known from US-A-4 710 708. Moles and methods for detecting their position are further known from US-A-3 529 682 and EP-A-0 343 140.

There have been know other conventional methods of location survey for driving a shield machine used in the shield tunneling method, too such as: a method in which the inside of a tunnel is surveyed with a transit or the like; and a method in which an optical oscillating device for generating a coherent light such as a laser beam is provided inside a vertical shaft of a shield machine, and in which the device emits the light along the planned tunnel line, and then the light spot on a target provided in the shield machine is read, and thus displacement and deflection angle of the shield machine are measured. In still another method, the position of the machine relative to a reference position is obtained with combinations of an direction gyro and a pressure-type subsidence recorder, and of a clinometer and driving distance recorder (referring to length of a segment). Further, the inventor has proposed (in Japanese Pat. Laid-Open No. 62-169012) a method in which a magnetic field generating cable is provided on the ground surface and a magnetic field detecting element is provided in an underground excavator, and in which a magnetic field generated from the cable is detected by the element and thus displacement in the horizontal position of the underground excavator is measured.

However, in a case where the inside-tunnel survey method employing a transit or the like is used to survey a to-be-bored tunnel which is curved or bent, many station points are required, increasing the number of work stages. Thus, such a method is not practical. If the method employing a laser beam is used to survey a curved or bent tunnel, the laser beam may not reach a target in some cases. In such cases, an optical oscillating device has to be moved to an appropriate position. Further, if a planned tunnel line is curved or bent, because, in such a case, a light beam can not directly irradiate the planned line, the displacement and deflection angle of the shield machine are usually obtained by measuring distances and angles between the target, the oscillating device and the planned tunnel line and by calculating from such measurements the positions thereof relative to one another. Therefore, extra work stages are required for the transposition of an oscillating device, the measurement and the calculation, and thus excavating efficiency decreases. A method employing a gyro has a problem in that because accumulated error becomes large, it is not suitable for a long-distance excavation. Further, a method employing a magnetic field has a problem in that though it measures horizontal displacement, it cannot measure excavating distance (such as a distance of excavation from a vertical shaft).

It is an object of the present invention to solve the above-mentioned problems by providing a position measuring apparatus of an underground excavator which easily and accurately measures the position on a horizontal plane or the like of a shield machine or the like which is excavating underground.

### DISCLOSURE OF THE INVENTION

The present invention provides a position measuring apparatus comprising: a transmitter including at least two sets of cables which are provided under or on the ground and around which AC magnetic fields are generated by electricity from an AC power source; a receiver which receives the AC magnetic fields; a computing unit which identifies signals from the receiver and which calculates the position of the underground excavator. Said invention is characterized by a position measuring apparatus in which the two sets of cables are substantially perpendicular to each other. Further the receiver includes two sets of magnetic field detecting elements which are substantially perpendicular to each other whereby the receiver is supported by a receiver supporting device which rotates, according to signals from a direction detecting device, so as to maintain these elements at specified angles to the two sets of cables. Further, the present invention provides a position measuring apparatus comprising a timing output circuit which controls so that AC magnetic fields are generated alternately from the two sets of cables.

In a position measuring apparatus constructed as described above, the magnetic fields generated by supplying AC currents to at least two sets of cables provided on or under the ground are received by the two sets of magnetic field detecting elements which intersect each other at a specified angle on the receiver supporting device which is controlled so as to face in a constant direction, and such magnetic field reception by these elements provides a level of voltage, by which the position on a horizontal plane of an underground excavator is easily and accurately detected.

A position measuring apparatus as described above may include two more sets of cables and another receiver, so that it can measure depth. The depth may also be measured by a conventional pressure-type subsidence recorder or a combination of a clinometer and a driving distance recorder.

## BRIEF DESCRIPTION OF THE DRAWINGS

FIG. 1 is a schematic plan view of a position measuring apparatus of an underground excavator according to the present invention;

FIG. 2 is a block diagram of a position measuring apparatus according to the first embodiment of the present invention;

FIG. 3 is a block diagram of a position measuring apparatus according to the second embodiment of the present invention;

FIGs. 4 and 5 are schematic drawings illustrating the principle of horizontal position detection according to the present invention; and

FIGs. 6 and 7 are schematic drawings showing exemplary placing of cables of transmitters respectively.

## THE BEST MODE FOR CARRYING OUT THE INVENTION

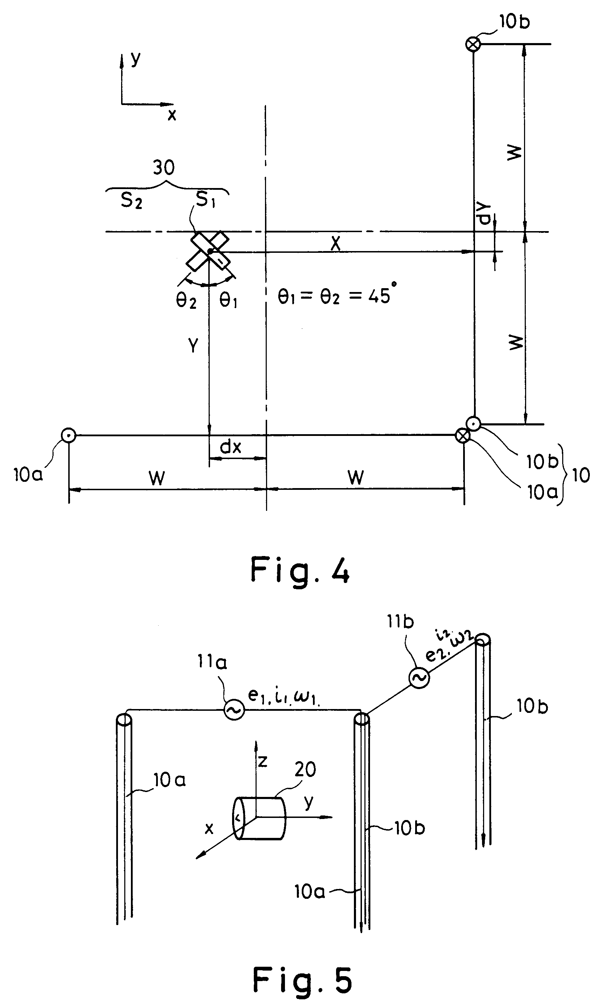

The principle of a horizontal position detection according to the present invention will be described with reference to FIGs. 4, 5.

FIG. 4 is a schematic plan view. In the figure, two sets of cables 10 formed in rectangular loops are provided vertically underground. A cable 10a is parallel (x-axis direction) to the direction of excavation. The other cable 10b is perpendicular (y-axis direction) to the direction of excavating and substantially perpendicular to the cable 10a. One side of the cable 10a touches one side of the cable 10b. A receiver 30 has two magnetic field detecting elements S1, S2 whose magnetic field detecting directions intersect perpendicularly and are angled at 45° to vertical planes of the cables 10a, 10b.

FIG. 5 is a schematic perspective view of what is shown in FIG. 4. An AC power source 11a supplies the cable 10a with voltage $e_1$, current $i_1$ and frequency $\omega_1$, and another AC power source 11b supplies the cable 10b with voltage $e_2$, current $i_2$ and frequency $\omega_2$.

Under these conditions, parameters are determined as the following:

2W: distance between wires of the cables 10a and distance between wires of the cables 10b

X: distance of the magnetic field detecting elements $S_1$ and $S_2$ from the cable 10b

Y: distance of the magnetic field detecting elements $S_1$ and $S_2$ from the cable 10a

dX: horizontal displacement of the magnetic field detecting elements $S_1$ and $S_2$ from the center of the cable 10a

dY: horizontal displacement of the magnetic field detecting elements $S_1$ and $S_2$ from the center of the cable 10b

$\theta_1$: angle between the magnetic field detecting element $S_1$ and a line perpendicular to the cable 10a

$\theta_2$: angle between the magnetic field detecting element $S_2$ and a line perpendicular to the cable 10a

$V_{11}$: voltage induced in the magnetic field detecting element $S_1$ by the cable 10a

$V_{21}$: voltage induced in the magnetic field detecting element $S_2$ by the cable 10a

$V_{12}$: voltage induced in the magnetic field detecting element $S_1$ by the cable 10b

$V_{22}$: voltage induced in the magnetic field detecting element $S_2$ by the cable 10b Displacement of the receiver 30 from the center of the X-axis is obtained as

$$dX = \{(V_{11} - V_{21})/(V_{11} + V_{21})\} \times (Y/2)$$

Displacement of the receiver 30 from the center of the Y-axis is obtained as

$$dY = \{(V_{12} - V_{22})/(V_{12} + V_{22})\} \times (X/2)$$

Distances of the receiver 30 from the cables of an underground excavator 20 are expressed as

$$X = W + dX$$
$$Y = W + dY$$

Thus

$$X = \{(1 + A)/(1 - AB)\} \times W$$
$$Y = \{(1 + B)/(1 - AB)\} \times W$$

where

$$A = (V_{11} - V_{21})/(V_{11} + V_{21})$$
$$B = (V_{12} - V_{22})/(V_{12} + V_{22})$$

Although the cable 10a and the cable 10b have the same distance between wires (2W) and the one side of a cable is touched to one side of the other cable in the above example, the distance of the receiver 30 from the underground excavator can naturally be obtained if the between-wire distances of the two cables are different from each other and the sides of the cables which are touched in the above example are separated or intersected.

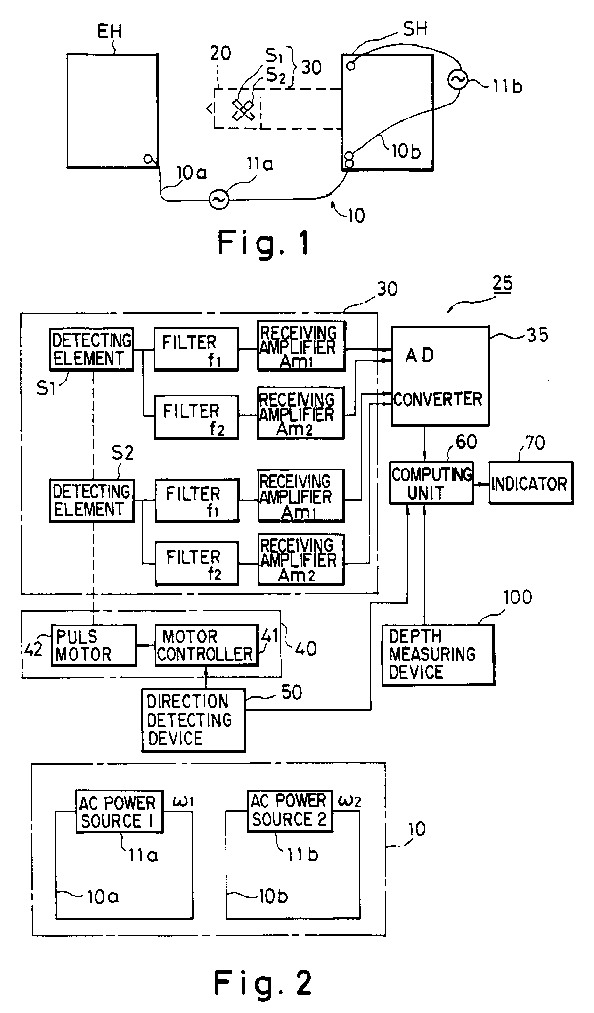

FIG. 1 shows a plan view of a position measuring apparatus of an underground excavator 20 according to the present invention constructed on the basis of the above described principle. FIG. 2 shows a detailed block diagram of the position measuring apparatus. The figures show: a start vertical shaft SH; an end vertical shaft EH; a transmitter 10 including two sets of cables, one being a cable 10a provided between the start vertical shaft SH and the end vertical shaft EH, and the other being a cable 10b provided inside the start vertical shaft SH; an underground excavator 20; a receiver 30 carried by the underground excavator 20 and including two magnetic field detecting elements $S_1$ and $S_2$ whose magnetic detecting directions are perpendicular to each other; an AD converter 35; and a receiver supporting device 40 which rotates according to signals from an direction detecting device 50 in order to position the receiver 30 at a certain angle to the two sets of transmitters. The direction detecting device 50 detects the direction in which the underground excavator 20 is driven, and controls the rotation of the receiver supporting device 40. A computing unit 60 calculates the position of the underground excavator 20 based on signals which the device 60 receives. A indicator 70 indicates the position of the underground excavator 20 according to the calculations by the computing unit 60. A depth measuring device 100 employs a pressure-type subsidence recorder or the like, according to this embodiment, to measure depth. The cables 10a and 10b of the transmitter 10 are perpendicular to each other and are supplied with power by AC power sources 11a and 11b respectively.

The receiver 30 includes: two magnetic field detecting elements $S_1$ and $S_2$; two filters $f_1$ and $f_2$ connected to these elements $S_1$ and $S_2$; and receiving amplifiers $Am_1$ and $Am_2$ connected to the filters $f_1$, $f_2$. The receiver 30 is connected through the AD converter 35 to the computing unit 60. The receiver supporting device 40 is rotated by a pulse motor 42 which is controlled by a motor controller 41 according to the signals from the direction detecting device 50, in order to maintain the positions of the magnetic field detecting elements $S_1$, $S_2$ or the like at constant angles. The magnetic field detecting elements S1, S2 are placed on a table (not shown).

Operation of the position measuring apparatus constructed as described above will be described. The AC power source 11a supplies the cable 10a with an AC current at a frequency $\omega_1$. The AC power source 11b supplies the cable 10b with an AC current at a frequency $\omega_2$. The AC currents thus generate magnetic fields around the cables 10a and 10b. The magnetic fields are detected by the magnetic field detecting elements $S_1$ and $S_2$. The filters $f_1$ and $f_2$ determine from which cable the magnetic field inducing the voltage in each of the magnetic field detecting elements is originated. The signals from the filters $f_1$ and $f_2$ are amplified by the receiving amplifiers $Am_1$ and $Am_2$. Then, the signals are converted into direct currents. The converted signals are converted into digital values by the AD converter 35. The computing unit 60 performs the calculation described above based on these signals, and obtains X and Y-coordinates of the position of the position measuring apparatus 20 of the underground excavator 30. The computing unit 60 also controls the receiver supporting device 40, according to the signals from the direction detecting device 50, so that the two magnetic fields detecting elements S1 and S2 will be at constant angles.

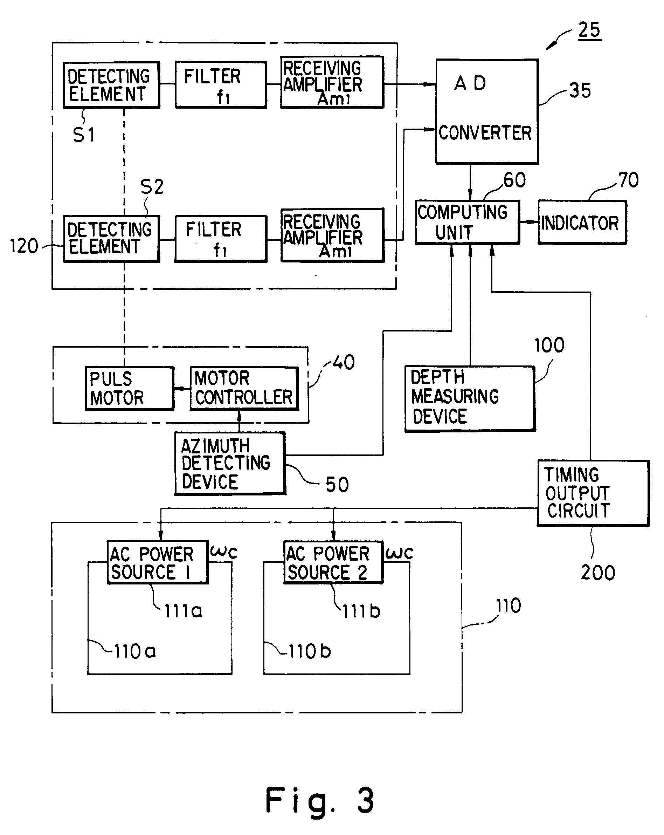

FIG. 3 is a block diagram of a position measuring apparatus 250 of an underground excavator 20 according to the second embodiment of the present invention. The parts equivalent to those of the first embodiment are denoted by the same numerals as in the first embodiment, and the description thereof will not be repeated.

Two sets of cables 110a and 110b of a transmitter 110 are substantially perpendicular to each other, and are alternately, according to signals from a timing output circuit 200, supplied with the same current (voltage $e_c$, current $i_c$, frequency $\omega_c$) from AC power sources 111a and 111b. A receiver 120 includes two magnetic field detecting elements, such as coils, $S_1$ and $S_2$; filters $f_1$ connected to each of these elements $S_1$ and $S_2$; receiving amplifiers $Am_1$ connected to the filters $f_1$. The receiver 120 is connected through an AD converter 35 to a computing unit 60.

The operation of such a construction will be described. The AC power sources 111a and 111b supply a frequency $\omega1$ to the cables 110a and 110b alternately according to the signals from the timing output circuit 200. AC magnetic fields are thus generated in concentric configurations about the cables 110a and 110b. The magnetics fields are detected by the magnetic field detecting elements S1 and S2. The detection signals are shaped by the filters f1. Because the signals from the timing output circuit 200 are inputted to the computing unit 60, it can be determined from which cable the detected magnetic field is originated.

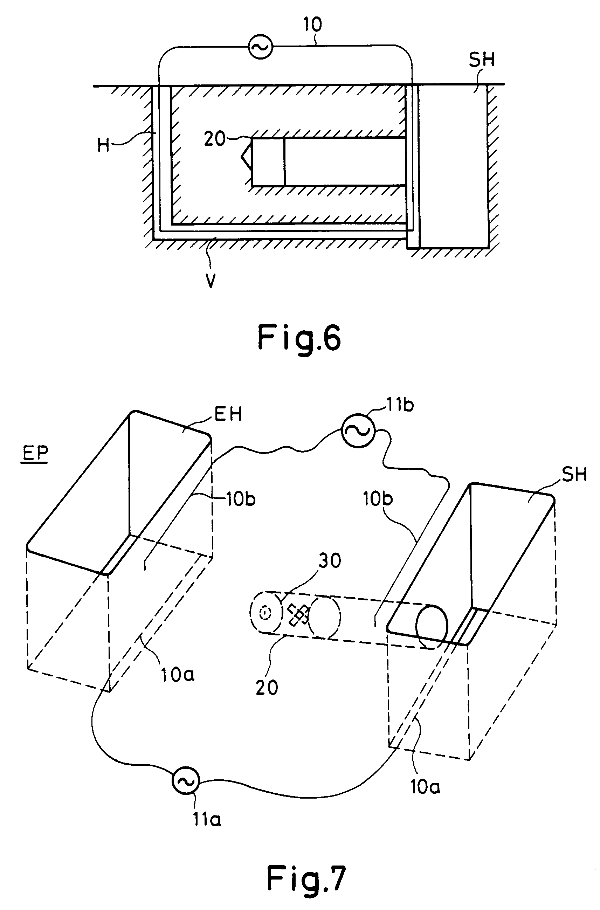

FIG. 6 illustrates an application of the present invention, wherein a horizontal shaft H is provided between a start vertical shaft SH and a cable vertical shaft V and a cable 10 is provided in these vertical shafts. FIG. 7 illustrates another application, wherein a cable 10a is provided underground between a start vertical shaft SH and an end vertical shaft EH and a cable 10b is provided on the ground surface therebetween.

A vertical shaft may be bored not only from the ground surface but from an underground portion of a building. In the case where vertical shafts are provided but no horizontal shafts, a cable may be grounded at a lower portion of a vertical shaft, providing similar effects to those in the above embodiments.

INDUSTRIAL APPLICABILITY

A position measuring apparatus according to the present invention advantageously detects automatically, continuously and instantaneously the horizontal position of an excavator, such as a shield machine, excavating underground.

Since the present invention can be realized by simply providing the necessary cables, a position measuring apparatus according to the present invention can be suitably used for boring a tunnel which is sharply curved or continuously curved with its depth varying greatly.

Claims

1. A position measuring apparatus of an underground excavator, comprising: a transmitter (10) including at least two sets of cables (10a), (10b) which are provided under or on the ground and around which AC magnetic fields are generated by electricity from an AC power source; a receiver (30) which receives the AC magnetic fields from the transmitter (10); and a computing unit (60) which identifies signals from the receiver (30) and which calculates the position of the underground excavator (20),
characterized in that said two sets of cables (10a), (10b) of the transmitter (10) are substantially perpendicular to each other, that said receiver (30) includes two sets of magnetic field detecting elements $(S_1)$, $(S_2)$ which are positioned so that the directions in which the elements $(S_1)$, $(S_2)$ detect the AC magnetic fields from the two sets of cables (10a), (10b) of the transmitter (10) are substantially perpendicular to each other and that said receiver (30) is supported by a receiver supporting device (40) which rotates, according to signals from a direction detecting device (50), so as to always maintain said two sets of elements $(S_1)$, $(S_2)$ at specified angles to the two sets of cables (10a), (10b).

2. A position measuring apparatus of an underground excavating apparatus according to claim 1, wherein a timing output circuit (200) is provided between said transmitter (10) and said computing unit (60) and the timing output circuit (200) provides signals whereby two sets of cables (10a), (10b) alternately receive AC currents so that AC magnetic fields are generated alternately around the cables (10a), (10b).

**Patentansprüche**

1. Positionsmeßgerät einer Maschine für unterirdischen Aushub, der folgendes umfaßt: einen Sender 10, der mindestens zwei Kabelsätze 10a und 10b enthält, die unter oder auf der Erdoberfläche verlegt werden und um die herum durch die Elektrizität aus einer Wechselstromquelle magnetische Wechselfelder erzeugt werden; einen Empfänger 30, der die magnetischen Wechselfelder vom Sender 10 empfängt; sowie eine Recheneinheit 60, die die Signale vom Empfänger 30 identifiziert und die Position der Maschine für unterirdischen Aushub 20 berechnet, gekennzeichnet dadurch, daß diese beiden Kabelsätze 10a und 10b des Senders 10 im wesentlichen rechtwinklig zueinander verlaufen; daß der Empfänger 30 zwei Sätze von Magnetfeldmeßfühlern $S_1$ und $S_2$ enthält, die so positioniert sind, daß die Richtungen, in denen diese Meßfühler $S_1$ und $S_2$ die magnetsichen Wechselfelder von den beiden Kabelsätzen 10a und 10b des Senders 10 messen, im wesentlichen rechtwinklig zueinander liegen, und daß der Empfänger 30 auf einer Empfängerstützvorrichtung 40 aufliegt, die sich entsprechend den Signalen eines Richtungsmeßgerätes 50 dreht, damit sich die beiden Sätze von

Meßfühlem $S_1$ und $S_2$ stets in festgelegten Winkeln zu den beiden Kabelsätzen 10a und 10b befinden.

2. Positionsmeßgerät einer Maschine für unterirdischen Aushub nach Anspruch 1, in dem eine Taktschaltung zur Zeitsteuerung 200 zwischen dem Sender 10 und der Recheneinheit 60 installiert ist und die Taktschaltung zur Zeitsteuerung 200 Signale abgibt, damit die zwei Kabelsätze 10a und 10b abwechselnd Wechselstrom empfangen, so daß magnetische Wechselfelder abwechselnd um die Kabel 10a und 10b erzeugt werden.

**Revendications**

1. Appareil de mesure de position d'un excavateur souterrain, comprenant : un transmetteur (10) incluant au moins deux jeux de câbles (10a), (10b) qui sont prévus sous ou sur le sol et autour desquels des champs magnétiques à courant alternatif sont engendrés par l'électricité d'une source de puissance à courant alternatif ; un récepteur (30) qui reçoit les champs magnétiques à courant alternatif du transmetteur (10) ; et une unité de calcul (60) qui identifie les signaux du récepteur (30) et qui calcule la position de l'excavateur souterrain (20),
caractérisé en ce que lesdits deux jeux de câbles (10a), (10b) du transmetteur (10) sont sensiblement perpendiculaires l'un par rapport à l'autre, en ce que ledit récepteur (30) comporte deux jeux d'éléments de détection du champ magnétique $(S_1)$, $(S_2)$ qui sont positionnés de façon que les directions, dans lesquelles les éléments $(S_1)$, $(S_2)$ détectent les champs magnétiques à courant alternatif des deux jeux de câbles (10a), (10b) du transmetteur (10), soient sensiblement perpendiculaires l'une par rapport à l'autre, et en ce que ledit récepteur (30) est supporté par un dispositif de support de récepteur (40) qui tourne, selon des signaux d'un dispositif de détection de sens (50), afin de toujours maintenir lesdits deux jeux d'éléments $(S_1)$, $(S_2)$ à des angles spécifiés par rapport aux deux jeux de câbles (10a), (10b).

2. Appareil de mesure de position d'un appareil d'excavation souterrain selon la revendication 1, dans lequel un circuit de sortie de minutage (200) est prévu entre ledit transmetteur (10) et ladite unité de calcul (60), et le circuit de sortie de minutage (200) fournit des signaux grâce à quoi les deux jeux de câbles (10a), (10b) reçoivent alternativement des courants alternatifs, de sorte que les champs magnétiques à courant alternatif sont engendrés alternativement autour des câbles (10a), (10b).

Fig. 1

Fig. 2

6

Fig. 3

Fig. 4

Fig. 5

8

Fig.6

Fig.7